Europäisches Patentamt

European Patent Office

Office européen des brevets

(19)

(11) Publication number: **0 332 121**

**A2**

# EUROPEAN PATENT APPLICATION

(12)

(21) Application number: **89103937.2**

(51) Int. Cl.⁴: **H01B 1/22 , H01B 1/24**

(22) Date of filing: **06.03.89**

(30) Priority: **08.03.88 IT 6718988**

(43) Date of publication of application:
**13.09.89 Bulletin 89/37**

(84) Designated Contracting States:
**AT BE DE ES FR GB NL SE**

(71) Applicant: **VALEO VISION S.p.A.**
**Via Asti, 89**
**I-10026 Santena(IT)**

(72) Inventor: **Amerio, Giorgio**
**93, Strada della Magra**
**IT-10156 Torino(IT)**

(74) Representative: **Boggio, Luigi et al**
**c/o Ingg. Carlo e Mario Torta Via Viotti, 9**
**I-10121 Torino(IT)**

(54) A synthetic thermoplastic polymer based on polyphenylene sulphide.

(57) A synthetic thermoplastic polymer based on polyphenylene sulphide incorporating a percentage of conductive material such as to confer on it a volume resistivity less than $10^8$ ohm.cm.

EP 0 332 121 A2

# A SYNTHETIC THERMOPLASTIC POLYMER BASED ON POLYPHENYLENE SULPHIDE

The present invention relates to a synthetic thermoplastic polymer based on polyphenylene sulphide.

Until now this material has been used in various products which above all exploit the good mechanical and insulating characteristics of polyphenylene sulphide.

The main object of the present invention is that of obtaining a synthetic thermoplastic polymer of said type which will be advantageously usable in various products and applications which involve a certain degree of electrical conductivity.

The said object is achieved by the present invention which relates to a synthetic thermoplastic polymer based on polyphenylene sulphide, characterised by the fact that it includes a percentage of conductive material such as to confer on it a volume resistivity less than $10^8$ ohm.cm.

For a better understanding of the present invention there is now given a non-limitative description of various examples.

First of all, starting from the basic synthetic polymer (polyphenylene sulphide, also called sulphide of polyphenylene), which can be mixed with glass fibres and/or mineral fillers, and mixing it with the maximum percentage (25%) of carbonaceous material (conveniently carbon black) so as to obtain a master batch or stock mixture, which can then be used by mixing it with the basic synthetic polymer in various percentages according to the value of volume resistivity desired in the final material.

The final percentage by weight of conductive material can vary between 1% and 25% so as to confer on the final material a volume resistivity less than $10^8$ ohm.cm; for particular applications, such as electrostatic paint, an optimal value of volume resistivity is in the region of $10^4$ ohm.cm, obtained with a percentage of carbon black equal to about 5%.

Conveniently the polyphenylene sulphide can be mixed with the carbonaceous material in a conventional mixer used for plastics material, and can then be pressed, fused, drawn and re-ground to obtain the stock batch mixture in the form of granules with homogeneous characteristics; thus, also, this stock batch mixture, with the addition of the basic synthetic polymer in the desired percentages, can be pressed, fused, drawn and regranulated to obtain homogeneity in the final material, in such a way as to guarantee that the electrical characteristics of the material will be substantially constant throughout its entire mass.

This material can then be utilised as considered most convenient for various applications, particularly where it is necessary to exploit its characteristics of electrical conductivity combined with the fundamental characteristic of ease of moulding, with high resistance to external agents (such as hydrocarbons) and heat. For example this material can be utilised advantageously for the production (by means of moulding the subsequent painting) of reflectors for vehicle headlamps.

Variations to the example described can include the presence of absence of glass fibres and/or mineral fillers in the polyphenylene sulphide, and the conductive material may be constituted by carbonaceous material which may comprise carbon black, graphite, acetylene black, lamp black etc, or else by metal fibres, which may have a diameter of several microns and a length of up to several millimetres.

The advantages obtained with the material of the present invention are evident from the description; finally, it is clear that various modifications and variations can be introduced to those specified without departing from the ambit of the inventive idea contained therein.

## Claims

1. A synthetic thermoplastic polymer based on polyphenylene sulphide, characterised by the fact that it includes a percentage of conductive material such as to confer on it a volume resistivity less than $10^8$ ohm.cm.

2. A synthetic polymer according to Claim 1, characterised by the fact that the said conductive material is present in a percentage by weight of between 1% and 25%.

3. A synthetic polymer according to Claim 2, characterised by the fact that the said conductive material is present in a percentage by weight of about 5%, such as to confer to the material a volume resistivity about $10^4$ ohm.cm.

4. A synthetic polymer according to any preceding Claim, characterised by the fact that the said conductive material is of carbonaceous type.

5. A synthetic polymer according to Claim 4, characterised by the fact that the said conductive material comprises graphite or carbon black or acetylene black or lamp black.

6. A synthetic polymer according to any of Claims from 1 to 3, characterised by the fact that the said conductive material comprises metal fibres.

7. A synthetic polymer according to any preceding Claim, characterised by the fact that it includes glass fibres and/or mineral fillers.